# EUROPÄISCHE PATENTSCHRIFT

(11) **EP 1 731 817 B1**
(45) Veröffentlichungstag und Bekanntmachung des Hinweises auf die Patenterteilung: **15.08.2007**
(21) Anmeldenummer: 06010733.1
(22) Anmeldetag: 24.05.2006
(51) Int. Cl.: F16L 19/028

(54) **Rohrverbindung mit einem umgeformten Rohr**
Pipe connection with deformed pipe
Raccord de tuyau comprenant un tuyau déformé

(30) Priorität: 08.06.2005 DE 102005026580; 19.05.2006 DE 102006038429
(43) Veröffentlichungstag der Anmeldung: 13.12.2006
(73) Patentinhaber: Eifeler Maschinenbau GmbH, 53881 Euskirchen (DE)
(72) Erfinder: Dahlen, Jürgen, 53879 Euskirchen (DE); Kloss, Alexander, 50997 Köln (DE); Schorn-Gilson, Alfons, 53913 Swisttal-Odendorf (DE)
(74) Vertreter: Bauer, Dirk

(56) Entgegenhaltungen:
- EP-A- 1 462 702

## Beschreibung

Die Erfindung betrifft eine Rohrverbindung mit einem umgeformten Rohr, einem Verschraubungskörper mit einem Innenkonus, einer auf den Verschraubungskörper aufschraubbaren Überwurfmutter mit einer inneren Spannfläche, die im Betriebszustand der Rohrverbindung mit einer dem Rohrende abgewandten, umformtechnisch hergestellten, radial über die äußere Mantelfläche des Rohres nach außen vorstehenden Haltefläche eines Haltewulstes des Rohres zusammenwirkt, sowie mit einem Stützring, der von der Stirnscite des Rohres her auf dieses aufschiebbar ist und sich mit einer dem Rohrende zugewandten kegeligen Spannfläche in dem Innenkonus des Verschraubungskörpers abstützt, wobei der Haltewulst des weiteren mit einer dem Rohrende zugewandten Haltefläche mit einer daran angepassten dem Rohrende abgewandten Haltefläche des Stützrings zusammenwirkt.

Eine derartige Rohrverbindung ist aus der EP 1 462 702 A2 bekannt. Bei dem Verschraubungskörper, auch (Verschraubungs-)Stutzen genannt, handelt es sich um einen in DIN/EN-ISO 8434 genormten so genannten 24°-Stutzen, bei dem sich an den Innenkonus ein zylindrischer Mantelabschnitt anschließt, der in seinem Durchmesser gegenüber dem Durchmesser der Durchgangsbohrung des Verschraubungsstutzens vergrößert ist. Der Übergang zwischen dem vergrößerten zylindrischen Abschnitt und dem sich daran anschließenden Abschnitt im Bereich der Durchgangsbohrung erfolgt in Form eines sogenannten Rohrsitzbodens, der eine senkrecht zur Mittelachse des Verschraubungskörpers ausgerichtete Kreisringfläche bildet. Der Durchmessersprung im Bereich des Rohrsitzbodens dient dazu, dass das Ende des umgeformten Rohres in dem im Durchmesser erweiterten Bereich Platz findet, um möglichst im Betriebszustand der Rohrverbindung einen Übergang im Bereich der inneren Mantelflächen des Rohres und des Verschraubungskörpers zu erhalten, der lediglich geringe Durchmesserdifferenzen aufweist, vorzugsweise sogar gänzlich frei von derartigen Durchmessersprüngen ist.

Eine Problematik der an sich bewährten und bekannten Rohrverbindung besteht darin, dass diese auf das sogenannte 24°-System zugeschnitten ist und sich zur Verwendung mit ande-ren Bauarten von Rohrverbindungsstutzen nicht eignet.

Aus der EP 1236 945 A2 ist des weiteren eine Rohrverbindung mit einem umgeformten Rohr bekannt. Bei dieser Rohrverbindung ist auf das Rohrende jedoch kein Stützring aufgeschaben. Vielmehr befindet sich zwischen der Stimfläche des umgeformten Rohres und dem Rohrsitzboden - auch diese Rohrverbindung basiert auf dem sehr verbreiteten 24°-System ― ein Dichtring, der zum Teil aus Metall und zum Teil aus verformbarem Kunststoffmaterial (Weichdichtung) besteht. Der Montagevorgang ist bei diesem System beendet, wenn die Stirnfläche des umgeformten Rohrendes den metallischen Bereich des Dichtrings zwischen sich und dem Rohrsitzboden eingespannt hat. In diesem Zustand ist die Weichdichtung zwischen dem metallischen Teil des Dichtrings, der kegelig angepassten Stirnseite des umgeformten Rohres und dem Innenmantel des Verschraubungskörpers verquetscht. Auch diesc vorbekannte Rohrverbindung ist lediglich in Verbindung mit dem 24°-System und seinem Rohrsitzboden verwendbar.

Ebenfalls auf das 24°-System zugeschnitten ist die Rohrverbindung, die in der DE 195 11 063 A1 offenbart ist. Hierbei wird entweder der 24°-Innenkonus allein für die Klemmung des Rohres benutzt oder aber in alternativen Ausführungsformen an das Rohr auch ein zylindrischer Endabschnitt angeformt, der sich in den im Durchmesser gegenüber dem Durchgangsabschnitt erweiterten Bereich des Verschraubungskörpers befindet. Diese vorbekannte Rohrverbindung weist keinerlei Stützring auf, die Abdichtung erfolgt entweder rein metallisch oder aber unter Verwendung einer Weichdichtung, die im Bereich des Innenkonus des Verschraubungskörpers, des Rohrsitzbodens oder aber radial außerhalb des angeformten Haltewulstes angeordnet sein kann.

Ferner ist in der DE 195 20 099 A1 noch eine Rohrverbindung beschrieben, bei der ein umgeformtes Rohrende derart ausgestaltet ist, dass es mit einem zylindrischen Endabschnitt sich bis zu dem Rohrsitzboden des hier wiederum verwendeten 24°-Verschraubungskörpers erstreckt. Mit einer senkrecht zur Rohrachse ausgerichteten vorderen Spannfläche des Halterwulstes liegt das umgeformte Rohr an der parallel hierzu ausgerichteten Stirnfläche des Verschraubungskörpers an. Auf diese Weise ist im Bereich des Innenkonus des Verschraubungskörpers eine Kammer ausgebildet, in der im Betriebszustand der Rohrverbindung eine Weichdichtung verquetscht ist. Auch diese vorbekannte Rohrverbindung eignet sich ausschließlich für das 24°-System mit dem in dessen Stutzen vorhandenen Rohrsitzboden.

Die Offenlegungsschrift DE 199 58 475 A1 offenbart eine Rohrverbindung, die aus einem umgeformten Rohr, einem Verschraubungskörper, einer Überwurfmutter, einem Dichtring und einem Stützring besteht. Das umgeformte Rohr ist mit einem Wulst versehen, der zusammen mit der Konusfläche der Überwurfmutter eine Anschlagfläche für eine Stirnfläche des Stützrings bildet. Die gegenüberliegende Seite des Stützrings weist eine radial verlaufende Ringfläche auf, die wiederum eine Anschlagfläche für den mit einem Konus ausgestatteten Endbereich des Verschraubungskörpers bildet. Der Dichtring wird in dem Zwischenraum, der begrenzt wird durch einen Teil des Rohres, den Stützring und den Konus des Verschraubungskörpers, angeordnet. Das aus dieser Schrift hervorgehende Verbindungssystem eignet sich für einen Verschraubungskörper mit genormten 24°-Konus.

Auch aus der Patentschrift DE 197 42 917 C1 geht eine Schraubverbindung ähnlich der aus der zuvor genannten Offenlegungsschrift hervor und basiert auf dem 24°-System. Ein mit einem Wulst ausgestattetes Rohr wird mit einem Stützring versehcn, der auf einer Seite eine Anschlagfläche für eine Überwurfmutter und auf der anderen Seite eine Anschlagfläche für einen Verschraubungskörper bildet. Auf der der Überwurfmutter zugewandten Seite ist der Stützring mit einer kegelig verlaufenden Anschlagfläche ausgestattet, gegen die sich die gleichermaßen verlaufende Anschlagfläche der Überwurfmutter bei dem Anzug der Überwurfmutter abstützt, wodurch eine Überbeanspruchung des Rohres in seinem Einspannbereich verhindert werden soll. Im Bereich des 24°-Konus des Verschraubungskörpers ist eine Weichdichtung angeordnet.

Bei dem Hochdruckverbindungssystem nach der Offenlegungsschrift DE 195 41622 A1 ist zur Verbesserung des Dichtverhaltens einer Rohrverbindung mit einem einen 24°-Anschluß aufweisenden Aufnahmekörper vorgesehen, ein erstes elastomeres Dichtelement zwischen der Stirnfläche eines Aufnahmekörpers und einem metallischen Dichtring anzuordnen. Ferner soll ein zweites elastomeres Dichtelement zwischen einer dem Rohr zugewandten Mantelfläche des Dichtrings und der Außenwand des Rohres angeordnet werden. Bei diesem vorbekannten Verbindungssystem handelt es sich um ein Schneidringsystem, bei dem der Schneidring mit dem Innenkonus des metallischen Dichtrings zusammenwirkt.

Das Patent EP 0 593 325 B1 hat eine Rohrkupplung zum Gegenstand, die die Befestigung eines mit einem Ringwulst ausgestatten Rohres in einer Bohrung eines Teils sicher stellen soll. Zum Einschrauben in die Bohrung wird auf der einen Seite des Ringwulstes eine Gewindemuffe auf das Rohr angebracht und auf der anderen Seite des Ringwulstes ein Ring, der durch Festschrauben der Gewindemuffe gegen eine Wandung der Bohrung gedrückt wird. Der Ring weist auf der zur Bohrung gewandten Seite eine Nut auf, die eine Dichtung aufnimmt. Bei dem Festschrauben wird die Dichtung breit gedrückt, wodurch das Rohr dicht in der Bohrung liegt.

Zum Stand der Technik zählen des weiteren Verschraubungskörper nach dem British Standard BS 5200, die einen 60°-Inncnkonus besitzen. Ein Rohrsitzboden, wie er aus dem 24°-System bekannt ist, existiert bei dem sogenannten 60°-System nicht. Bei dem 60°-System, dessen Hauptanwendungsfall die sogenannte Mobilhydraulik ist, bei der zum Bcispiel keine Temperaturprohlematik wie beispielsweise bei Systemen der chemischen Industrie besteht, werden keine umgeformten Rohrenden, sondern Verbindungsnippel benutzt, in die im Wege einer spanenden Bearbeitung im Bereich einer 60°-Kegelfläche eine Nut zur Aufnahme einer Weichdichtung eingeformt ist. In der Regel ist der Verbindungsnippel mit einer radial verpressten Überwurfmutter oder mit Hilfe eines eine Formschlussverbindung bewirkenden, in Umfangsrichtung offenen Drahtrings mit einer Überwurfmutter verbunden. Typischerweise schließt sich an den Verbindungsnippel ein flexibles Schlauchstück an.

### Aufgabe

Der Erfindung liegt die Aufgabe zugrunde, eine Rohrverbindung mit einem umgeformten Rohr vorzuschlagen, die sich zur Verwendung bei dem bekannten 60°-System eignet.

### Lösung

Ausgehend von einer Rohrverbindung der eingangs beschriebenen Art wird diese Aufgabe erfindungsgemäß dadurch gelöst, dass der Innenkonus des Verschraubungskörpers unmittelbar in dessen zylindrische innere Mantelfläche, die die Durchgangsbohrung des Verschraubungskörpers definiert, übergeht und sich die Stirnfläche des Rohres zumindest zum Teil radial nach innen in den Querschnitt der Durchgangsbohrung des Verschraubungskörpers erstreckt.

Mit der von der Erfindung bercitgestellten Rohrverbindung lässt sich nunmehr auch mit dem bekannten 60°-Verschraubungskörper ein ungeformtes Rohrende kombinieren. Von dem beim 60°-System bislang weitestgehend verwendeten Prinzip der Weichdichtung wird nunmehr abgerückt, da die erfindungsgemäße Rohrverbindung grundsätzlich auch lediglich mit Hilfe der als metallische Dichtfläche wirkenden kegeligen vorderen Spannfläche des Stützrings eine Abdichtung bewirken kann. Bevorzugt ist jedoch auch bei der erfindungsgemäßen Rohrverbindung eine Dichtung, insbesondere in Form einer elastisch verfombaren Weichdichtung vorhanden. Die erfindungsgemäße Rohrverbindung weist dabei einen Stützring auf, weil die umformtechnische Ausbildung einer in den 60°-Innenkonus passenden Rohraußenkontur zumindest mittels eines einzigen Stauchvorgangs ohne relevante Rohrschädigung und die damit verbundene Leistungsreduzierung nicht möglich ist.

Um insbesondere bei großen Wandstärken des umgeformten Rohres bzw. im Verhältnis hierzu kleinen Wandstärken des Verschraubungskörpers hinreichende Platzverhältnisse für einen im Innenkonus des Verschraubungskörpers anliegenden Stützring zu schaffen, erstreckt sich das umgeformte Rohr zumindest in seinem Endabschnitt in den Querschnitt der Durchgangsbohrung, d. h. der kleinste Querschnitt des umgeformten Rohrendes ist kleiner als der Durchgangsquerschnitt des Verschraubungsstutzens.

Eine besonders zuverlässige Abdichtung der erfindungsgemäßen Rohrverbindung lässt sich erzielen, wenn dem Stützring ein Dichtring, vorzugsweise in Form einer Weichdichtung, vorgelagert ist. Vorzugsweise ist der Dichtring in einer im Querschnitt dreieckförmigen Kammer eingeschlossen, die von einer äußeren Mantelfläche des Endabschnitts des Rohres, einer dem Rohrende zugewandten vorderen Stirnfläche des Stützrings und dem Innenkonus des Verschraubungskörpers gebildet ist.

Im Sinne einer vereinfachten Handhabung der Rohrmontage ist vorgesehen, dass der Dichtring mit einer Verbindungsfläche an die vordere Stimflächc des Stützrings geklebt oder daran anvulkanisiert ist. Es entfällt auf diese Weise die Notwendigkeit, den Stützring und den Dichtring als separate Teile bei der Montage handhaben zu müssen.

Gemäß einer Ausgestaltung der Rohrverbindung nach der Erfindung ist vorgesehen, dass das Rohrende einen zylindrischen Endabschnitt aufweist, dessen Außendurchmesser vorzugsweise dem Außendurchmesser des Rohres im unverformten Bereich entspricht, wodurch eine sichere Fixierung des darauf geschobenen Stützrings ermöglicht wird. Zum einen ist der Aufwand beim Umformvorgang hierbei eher gering, zum anderen erlaubt der zylindrische Endabschnitt eine sichere Fixierung des darauf geschobenen Stützrings. Die Ausformung eines zylindrischen Endabschnitts bietet sich insbesondere bei vergleichsweise großen Rohrdurchmessern und Rohrwandstärken an.

Eine besonders sichere Positionierung des Dichtrings ergibt sich, wenn der Stützring eine konische vordere Stirnfläche aufweist, an der im Betriebszustand der Rohrverbindung der Dichtring anliegt.

Die Erfindung weiter ausgestaltend wird vorgeschlagen, dass der Stützring an seinem dem Rohrende abgewandten Ende einen sich radial außerhalb des Haltewulstes erstreckenden Ansatz aufweist. Auf diese Weise wird die Möglichkeit geschaffen, dass die Spannfläche der Überwurfmutter sowohl mit der zugeordneten Spannfläche des Haltewulstes als auch mit einer radial außerhalb angeordneten Spannfläche des Stützrings zusammenwirkt.

Alternativ zu einer zylindrischen Ausgestaltung des Endabschnitts des umgeformten Rohres kann dieses auch kegelig ausgestaltet sein, wobei sich dann an den kegeligen Endabschnitt ein sich bis zu dem Haltewulst erstreckender zylindrischer Abschnitt angeschlossen sein sollte, auf den sich ein entsprechend angepasster zylindrischer Abschnitt des Stützrings aufscbieben lässt, um eine hinreichende Montagesicherheit zu erreichen. Eine derartige Rohrendengeometrie eignet sich besonders für dünnwandige und kleine Rohre.

Vorzugsweise weist somit die innere Mantelfläche des Stützrings einen zylindrischen Abschnitt auf, der in Durchmesser dem Durchmesser des zylindrischen Abschnitts des Rohrabschnitts angepasst ist. Außerdem weist die innere Mantelfläche des Stützrings vorzugsweise einen dem zylindrischen Abschnitt vorgelagerten konischen Abschnitt auf, der dem kegeligen Abschnitt des Rohrendes angepasst ist.

Vorzugsweise wenn der Stützring im Betriebszustand nicht mit der inneren Spannfläche der Überwurfmutter zusammenwirkt, sollte der Haltewulst im Betriebszustand von der inneren Spannfläche der Überwurfmutter gespannt werden. Alternativ ist es natürlich auch möglich, dass der Stützring eine - vorzugsweise kegelige - Spannfläche besitzt, die im Betriebszustand der Rohrverbindung an-der inneren ebenfalls vorzugsweise angepasst konusförmigen - Spannfläche der Überwurfmutter anliegt.

Außerdem kann die Erfindung noch dadurch weitergebildet werden, dass der Stützring eine vordere, senkrecht zur Mittelachse des Rohres ausgerichtete Anschlagfläche besitzt, die im Betriebszustand an einer ebenso ausgerichteten Stirnfläche des Verschraubungskörpers anliegt. Hierdurch kann dem Monteur beim Anziehen der Überwurfmutter mittels eines deutlichen Drehmomentanstiegs signalisiert werden, dass die Komponenten der Rohrverbindung "auf Block" liegen und somit das Montageende erreicht ist.

Ferner besteht die Möglichkeit, dass der Haltcwulst eine vordere, vorzugsweise senkrecht zur Mittelachse des Rohres ausgerichtete Spannfläche besitzt, die mit einer vorzugsweise ebenso ausgerichteten dem Rohrende abgewandten hinteren Spannfläche des Stützrings zusammenwirkt.

Die innere Spannfläche der Überwurfmutter kann insbesondere konisch (90°-Winkel) ausgeformt sein und die damit zusammenwirkende Spannfläche des Haltewulstes bzw. des Stützrings sollte dann ebenfalls angepasst kegelförmig verlaufen.

Alternativ zu den vorstehend beschriebenen Möglichkeiten zur Anordnung einer Weichdichtung wird gemäß der vorliegenden Erfindung vorgeschlagen, dass der Stützring mindestens zwei umlaufende Nuten zur Aufnahme jeweils eines Dichtrings, vorzugsweise jeweils einer Weichdichtung, aufweist, wobei eine erste Nut sich in der kegligen Spannfläche des Stützrings befindet und somit im Betriebszustand der Rohrverbindung der Öffnungsquerschnitt der Nut von dem Innenkonus des Verschraubungskörpers und eine zweite Nut in einer zylindrischen inneren Mantelfläche des Stützrings befinden, wobei der Öffnungsquerschnitt der Nut im Betriebszustand der Rohrverbindung in diesem Fall von der äußeren Mantelfläche des Rohres verschlossen wird.

Die umlaufenden Nuten erlauben eine sehr sichere Unterbringung des Dichtrings bereits vor der Montage. Durch die auf diese Weise vorliegende sehr sichere Fixierung wird während des sich anschließenden Montagevorgangs die Gefahr reduziert, dass sich ein Dichtring unbeabsichtigt verlagert und in Bereiche gelangt, in denen er beispielsweise abgeschert wird bzw. aus anderen Gründen seine Dichtfunktion nicht optimal erfüllen kann. Die erfindungsgemäßen Montagenuten können hier auf einfache Art und Weise Abhilfe schaffen, da die insbesondere spanende Herstellung der Nuten bei der ohnehin spanenden Herstellung des Stützrings keinen übermäßigen Fcrtigungsaufwand darstellt.

Die keglige Spannfläche des Stützrings kann des Weiteren bei dieser Erfindung sehr weit in die konusförmige Spannfläche des 60°-Konus hereingezogen werden, so dass sie eine sehr sichere Führung für den Stützring ergibt.

Vorzugsweise verläuft der Nutgrund der ersten Nut parallel zu der kegligen Spannfläche des Stützrings, so dass sich eine sehr gleichmäßige Druckverteilung auf den Dichtring im komprimierten Zustand realisieren lässt. Die Dichtringkammer besitzt in diesem Fall ungefähr die Form eines Parallelogramms, wobei der Übergangsbereich zwischen den Nutwandungen und dem Nutgrund aus fertigungstechnischen Gründen gerundet ist.

In Bezug auf die zweite Nut ist es von Vorteil, dass im Bereich der inneren zylindrischen Mantelfläche des Stützrings die Platzverhältnisse besonders günstig sind, so dass auch großvolurnige Nutquerschnitte, d.h. entsprechend großvolumige Dichtringe, untergebracht werden können.

Eine bevorzugte Weiterbildung der Erfindung besteht darin, dass die Nutwandungen ausgehend von der an die Nut angrenzenden Oberfläche des Stützrings im Betriebszustand der Rohrverbindung unter einem Winkel von 90° zu der Mittelachse des Rohrs ausgerichtet sind. Hierdurch wird die Herstellung der Nuten bei Anwendung spanabhebender Fertigungsverfahren insbesondere durch eine Drehbearbeitung erleichtert.

Ferner wird noch vorgeschlagen, dass die senkrecht zu den Nutwandungen gemessene Nutbreite größer als die senkrecht zur Mittelachse des Rohres gemessene Nuttiefe ist. Ein im komprimierten Zustand im Querschnitt ovalförmiger Dichtring ist in einer derart geformten Nut besonders günstig untergebracht.

Zur Verbesserung der Führung des Stützrings innerhalb der Überwurfmutter ist bei einer bevorzugten Ausführungsform vorgesehen, dass der Außendurchmesser des Stützrings nur geringfügig kleiner als der Innendurchmesser der Überwurfmutter ist.

Schließlich wird die Erfindung noch dadurch weiter gebildet, dass der Übergang von der kegligen Spannfläche des Stützrings zu einer äußeren zylindrischen Mantelfläche des Stützrings in Form einer Hohlkehle ausgebildet ist.

### Ausführungsbeispiele

Die Erfindung wird nachfolgend anhand mehrerer Ausführungsbeispiele einer Rohrverbindung, die in der Zeichnung dargestellt sind, näher erläutert. Es zeigt
- Fig. 1a: eine erste Ausführungsform einer Rohrverbindung mit zylindrischen Endabschnitt des Rohres und einem im Querschnitt runden Dichtring;
- Fig. 1b: wie Figur 1a, jedoch mit einem im Querschnitt trapezförmigen Dichtring;
- Fig. 2a: wie Figur 1a, jedoch mit einem im Durchmesser vergrößerten umgeformten Rohr;
- Fig. 2b: wie Figur 2a, jedoch mit einem im Querschnitt ungefähr dreieckförmigen Dichtring;
- Fig. 2c: wie Figur 2a, jedoch mit einem an seiner vorderen Stimfläche konischen Stützring;
- Fig. 3 a: eine alternative Ausführungsform der Rohrverbindung mit einem kegeligen Endabschnitt des umgeformten Rohres,
- Fig. 3b: wie Figur 3a, jedoch mit einer vorderen Anschlagfläche des Stützrings und
- Fig. 4: eine weitere alternative Ausführungsform einer Rohrverbindung mit zwei Dichtringen

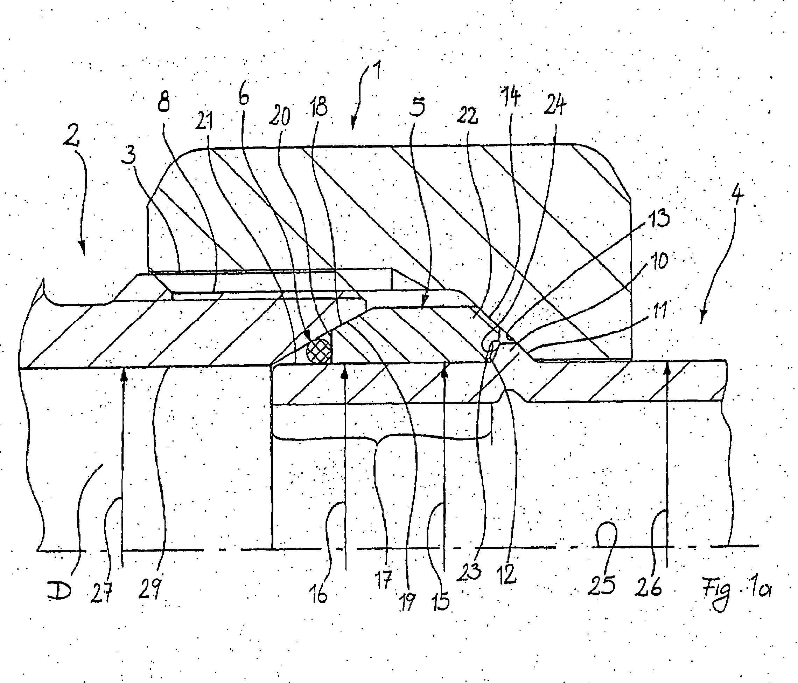

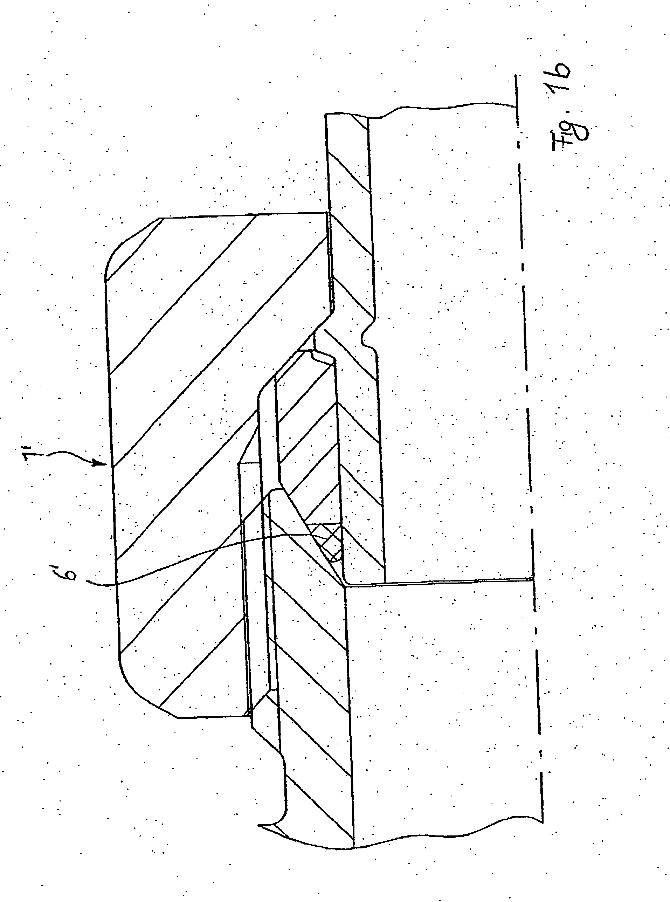

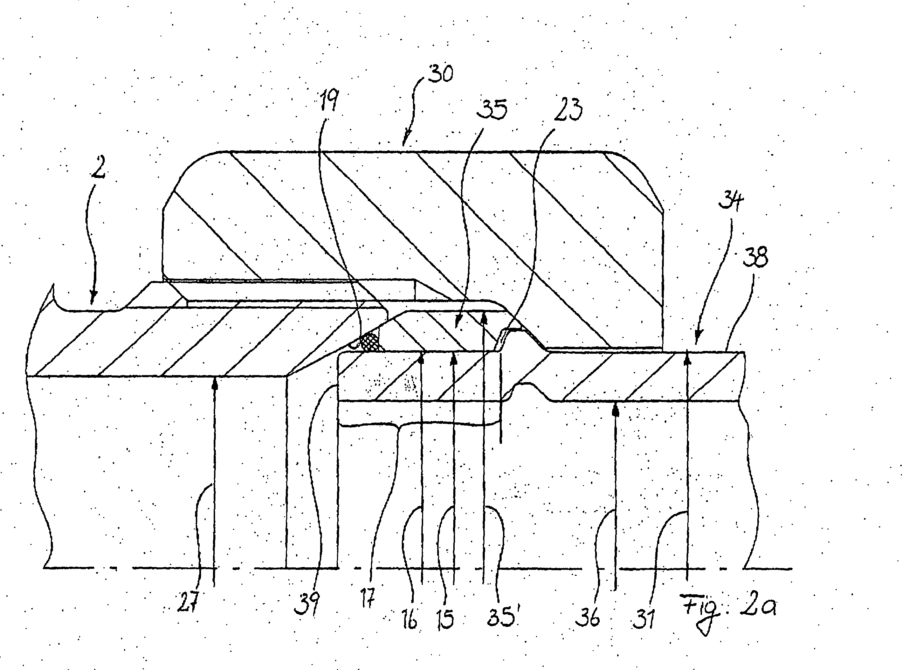

Figur 1a zeigt eine insgesamt mit 1 bezeichnete Rohrverbindung im Halbschnitt, die aus einem lediglich abgebrochen dargestellten Verschraubungskörper 2 mit einem Außengewinde 3, einem ebenfalls lediglich abgebrochen dargestellten umgeformten Rohr 4, einem Stützring 5, einem Dichtring 6 sowie einer Überwurfmutter 7 besteht, die mit ihrem Innengewinde 8 auf das Außengewinde 3 des Verschraubungskörpers aufgeschraubt ist.

Das Rohr 4 weist in gewissem Abstand von seiner Stirnseite 9 einen mittels eines Stauchvorgangs in einem speziellen Werkzeug ausgeformten Haltewulst 10 auf, der eine der Stirnseite 9 des Rohres 4 abgewandte hintere Haltefläche 11 in Form eines 90°-Kegels und eine gegenüberliegende vordere Haltefläche 12 besitzt, die ebenfalls kegelförmig gestaltet ist. Die Überwurfmutter 7 besitzt eine innere Spannfläche 13, die einen 90°-Konus bildet und zum einen mit der Haltefläche 11 des Haltewulstes 10 zusammenwirkt und zum anderen an der ebenfalls einen 90°-Kegel bildenden Haltefläche 14 des Stützrings 5 anliegt. Dieser ist in seinem Innendurchmesser 15 dem Außendurchmesser 16 des umgeformten Rohres 4 in dessen zylindrischen Endabschnitt 17 angepasst und stützt sich des weiteren mit seiner eine 60°-Kegel definierenden Spannfläche 18 in dem 60°-Innenkonus 19 des Verschraubungskörpers 2 ab. Durch die beidseitige Einspannung des Stützrings 5 wird der Betriebszustand der Rohrverbindung 1 definiert, wobei das Erreichen dieses Betriebszustandcs für den Monteur durch einen Drehmomentanstieg in Folge der Blockanlage der Bauteile Verschraubungskörpers 2, Stützring 5 und Überwurfmutter 7 signalisiert wird. Im Bereich vor der vorderen Stirnfläche 20 des Stützrings 5 befindet sich gekammert der Dichtring 6 auf dem Außendurchmesser des Endabschnitts 17 des Rohres 4. Die Kammer, in der der Dichtring 6 im Betriebszustand der Rohrverbindung 1 verpresst ist, wird gebildet durch den Innenkonus 19 des Verschraubungskörpers 4, die vordere Stirnfläche 20 des Stützrings 5 und die äußere Mantelfläche 21 des Rohres 4 im Bereich dessen Endabschnitts 17.

Der Stützring 5 ist an seinem der Stirnseite 9 des Rohres 4 abgewandten Ende mit einem radial außerhalb des Haltewulstes 11 des Rohres 4 angeordneten Ansatz 22 versehen, an der ein Teil der kegeligen Haltefläche 14 ausgeformt ist. Radial innerhalb des Ansatzes 22 befindet sich auch im Betriebszustand der Rohrverbindung 1 ein geringfügiger Spalt 23 zwischen der vorderen Haltefläche 12 des Haltewulstes 10 und der gegenüberliegenden parallel verlaufenden Fläche 24 des Stützrings 5. Hierdurch wird sichergestellt, dass auch bei unvermeidbaren Toleranzen bei der Ausformung des Haltewulstes 10 in Kombination mit den Toleranzen aller übrigen Bauteile der Rohrverbindung 1 die Klemmung des Stützrings 5 stets im Bereich der Haltefläche 14 und nicht im Bereich der Fläche 24 erfolgt. Dies hat zur Folge, dass das Rohr 4 sich auch im Betriebszustand um ein geringes Maß (axiale Breite des Spaltes 23) in Richtung seiner Mittelachse 25 bewegen kann. Der Außendurchmesser 26 des Rohres 4 in seinem nicht umgeformten Bereich entspricht dem Außendurchmesser 16 des Rohres 4 im Endabschnitt 17 nach der Umformung. Der AuBendurchmesser 16 im Endabschnitt 17 des Rohres 4 ist im übrigen kleiner als bzw. maximal gleich groß wie der Innendurchmesser 27 des Verschraubungskörpers 2 im Bereich von dessen Durchgangsbohrung D. Daher kommt die vordere Stirnfläche 9 des Rohres 4 bzw. die Umlaufkante im Bereich des Übergangs von der Stirnfläche 9 in den Außenmantel 21 des Rohres 4 nicht mit dem Innenkonus 19 des Verschraubungskörpers 2 in Kontakt, wobei der Innenkonus 19 entsprechend der britischen Norm BS 5200 übergangslos in die innere Mantelfläche 29 des Verschraubungskörpers übergeht.

Die Rohrverbindung 1', wie sie in Figur 1b dargestellt ist, unterscheidet sich von der Rohrverbindung 1 gemäß Figur 1a lediglich dadurch, dass anstelle des im Querschnitt kreisförmigen Dichtrings 6 ein im Querschnitt trapezförmiger Dichtring 6' vorhanden ist, der sich besonders günstig zur Verbindung mit dem Stützring 5 eignet. Die wirksame Länge der abdichtenden Flächen des Dichtrings 6' ist gegenüber der Version gemäß Figur 1a vergrößert und daher die Dichtwirkung verbessert.

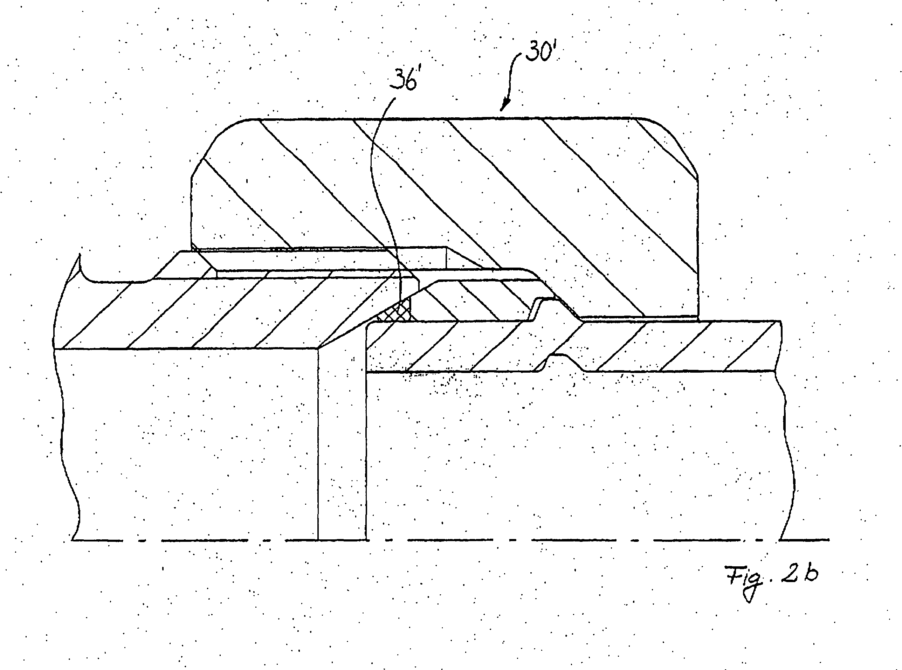

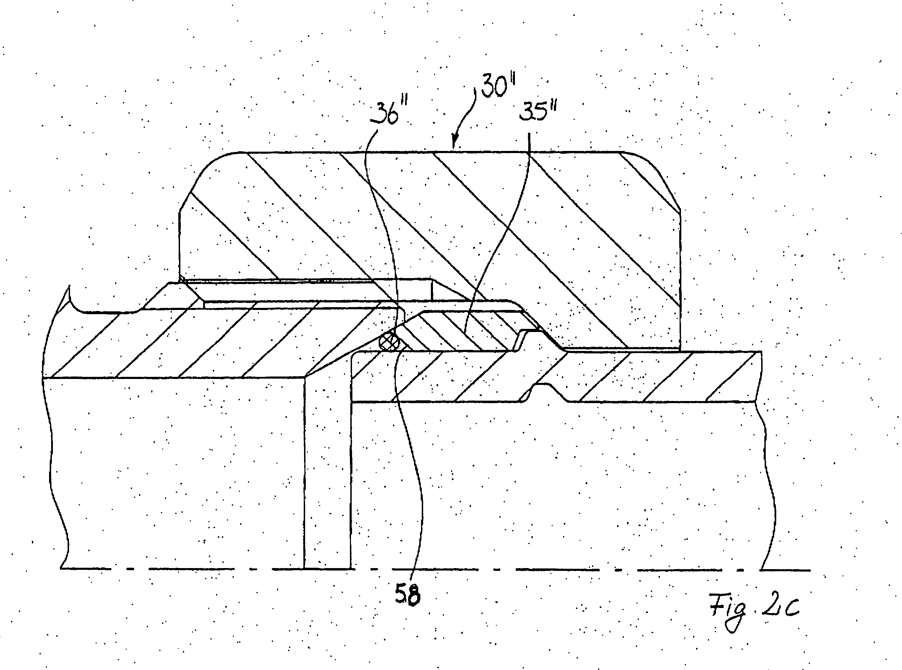

Bei der abgewandelten Rohrverbindung 30 nach Figur 2a ist im Vergleich mit den Rohrverbindungen nach den Figuren 1a und 1b ein Rohr 34 mit einem größeren Innen- und Außendurchmesser sowie einer vergrößerten Wandstärke vorhanden. Der Verschraubungskörper 2 ist jedoch unverändert geblieben. Der Stützring 5 weist einen entsprechend dem Außendurchmesser 16 des Rohres 34 in dessen Endabschnitt 17 vergrößerten Innendurchmesser 15 und einen ebenfalls vergrößerten Außendurchmesser 35 auf, wobei die Wandstärke des Stützrings 35 gegenüber der des Stützrings 5 nach den Figuren 1a und 1b leicht reduziert ist. Der Innendurchmesser 36 des Rohres 34 sowohl in dessen Endabschnitt 17 als auch in dessen nicht umgeformten übrigen Abschnitt ist kleiner als der Innendurchmesser 27 des Verschraubungskörpers 2 im Bereich von dessen Durchgangsbohrung. Der Außendurchmesser 31 des Rohres 34 sowohl in dessen Endabschnitt 17 als auch in dessen übrigen nicht umgeformten Abschnitt ist jedoch größer als der Innendurchmesser 27 des Verschraubungskörpers 2 im Bereich von dessen Durchgangsbohrung. Es kommt jedoch zu keinerlei Anlage der Stirnfläche 39 des Rohres 34 bzw, der Umlaufkante im Übergangsbereich von dieser Stirnfläche 39 zu der äußeren Mantelfläche 38 des Rohres 34 am Innenkonus 19 des Verschraubungskörpers 2, auch nicht unter Berücksichtigung des Spaltes 23, der eine minimale Verschiebung des Rohres 38 auch im Betriebszustand der Rohrverbindung 30 in axiale Richtung ermöglicht.

Bei der Rohrverbindung 30' gemäß Figur 2b besitzt der Dichtring 36' im Querschnitt eine Trapezform, wodurch die grundsätzlich Dichtqualität gesteigert wird. Ansonsten sind keine Unterschiede zur Rohrverbindung 30 gemäß Figur 2a vorhanden.

Bei der Rohrverbindung 30" entsprechend Figur 2c findet ein modifizierter Stützring 35" Verwendung, der eine konisch nach innen zurückspringend ausgeformte vordere Stirnfläche 58 besitzt, an der der im Querschnitt kreisförmige Dichtring 36" anliegt.

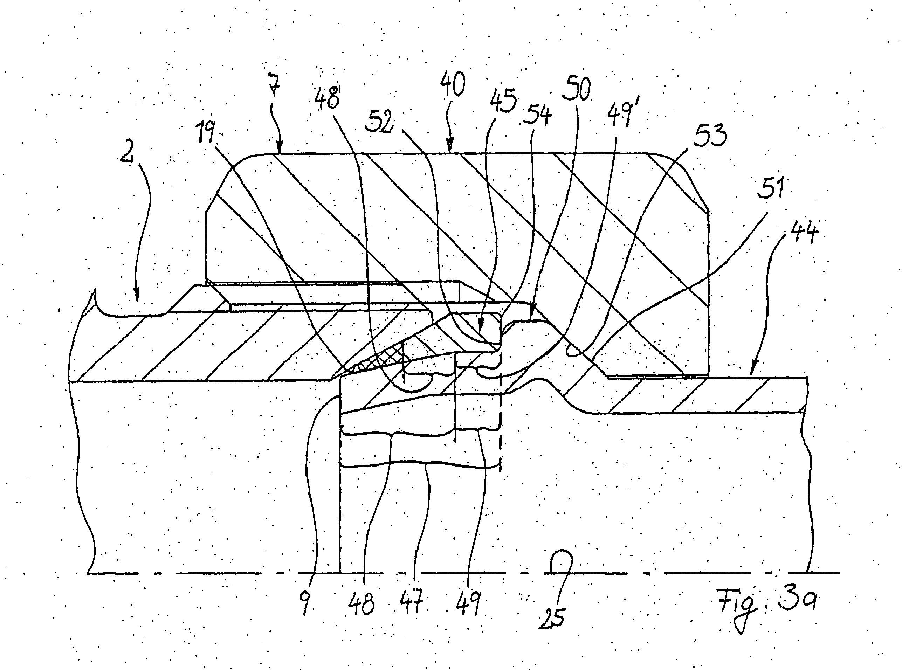

Bei der in Figur 3a gezeigten Rohrverbindung 40 ist das umgeformte Ende des Rohres 44 alternativ ausgestaltet. Der Endabschnitt 47 des Rohres 44 besitzt einen - in bezug auf seinen äußeren Mantel ― vorderen Abschnitt 48, der kegelförmig ausgebildet ist und einen sich daran anschließenden hinteren Abschnitt 49, der zylinderförmig ist. Entsprechend der Außenkontur dieses Endabschnitts 47 ist die Innenkontur des Stützrings 45 ausgeformt, die ebenfalls einen vorderen konusförmigen Abschnitt 48' und einen hinteren zylindrischen Abschnitt 49' besitzt Der Stützring 45 ist auf diese Weise vor der Montage auf den Endabschnitt 47 des Rohres 44 aufschiebbar, wobei aufgrund entsprechender Abstimmung der Durchmesser in den Bereichen 49 und 49' eine gewisse Klemmwirkung zur Montagevereinfachung erreicht wird.

Der Stützring 45 weist an seiner der Stirnfläche 9 des Rohres abgewandten Seite eine Spannfläche 54 auf, die senkrecht zu der Mittelachse 25 des Rohres 44 ausgerichtet ist und mit einer parallel hierzu ausgerichteten Spannfläche 52 an dem Haltewulst 50 des Rohres 44 zusammenwirkt. An der gegenüberliegenden Seite weist der HaltewuIst 50 eine kegelförmige Spannfläche 51 auf, die im Betriebszustand der Rohrverbindung 40 an einer entsprechend ausgeformten konusförmigen inneren Spannfläche 53 der Überwurfmutter 7 anliegt.

Da im vorliegenden Fall die Bauteile Überwurfmutter 7, Haltewulst 50, Stützring 45 und Verschraubungskörper 2 im Betriebszustand "auf Block" liegen ist eine axiale Beweglichkeit des Rohres 44 im Betriebszustand nicht gegeben. Im Betriebszustand verbleibt zwischen der Stirnfläche 9 des Rohres 44 und dem Verschraubungskörper 2, insbesondere dessen Innenkonus 19, ein geringfügiger Freiraum F.

Während die Rohrverbindung 40 gemäß Figur 3a nach belastungsbedingt eventuell auftretenden Setzerscheinungen erforderlichenfalls durch Drehen der Überwurfmutter 7 nachziehbar ist, ist dies bei der alternativ in Figur 3b gezeigten Rohrverbindung 40' deshalb kaum möglich, weil der dort verwendete Stützring 45' eine vordere Anschlagfläche 55 besitzt, die mit einer senkrecht zu der Achse 25 des Rohres 44 ausgerichteten Stimfläche des Verschraubungskörpers 2 zusammen wirkt. Das Montageende wird dem Monteur bei der Rohrverbindung 40' durch einen deutlichen Anstieg im Drehmomentvcrlauf angezeigt, wenn die Bauteile Überwurfmutter 7, Haltewulst 50, Stützring 45' und Verschraubungskörper 2 "auf Block" anliegen.

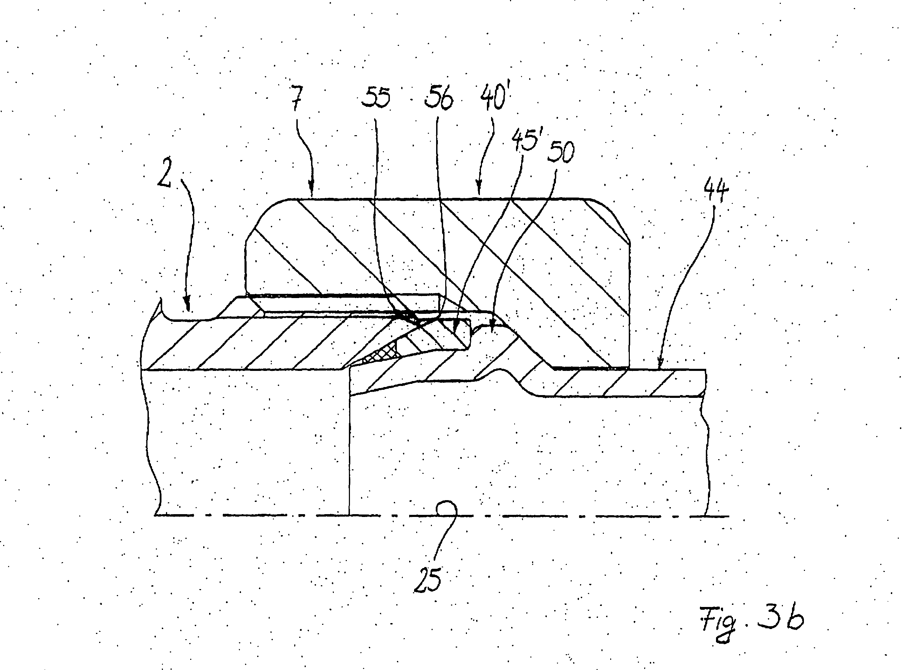

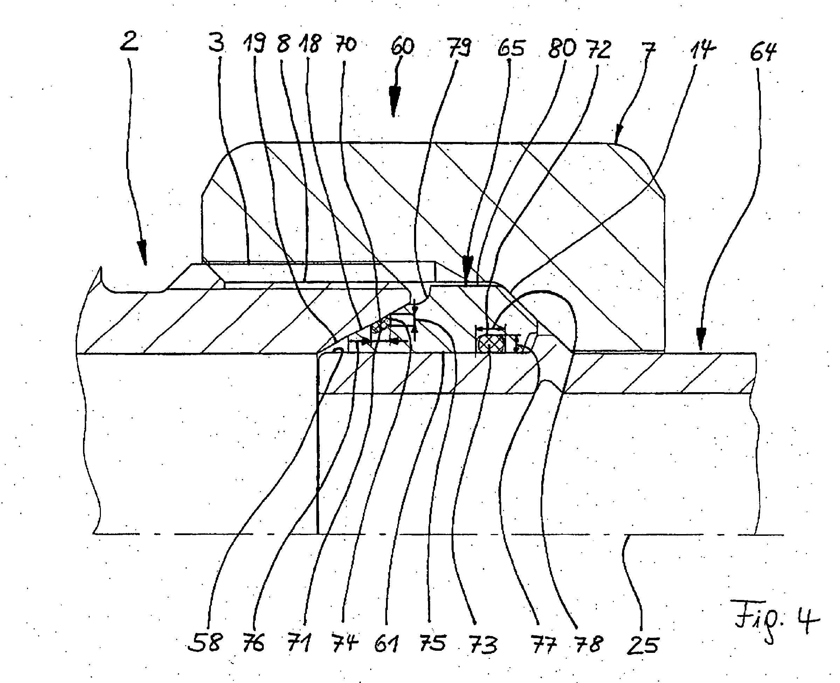

Eine insgesamt mit 60 bezeichnete, weitere alternative Rohrverbindung, die in Figur 4 im Halbschnitt dargestellt ist, besteht aus einem genormten 60° Verschraubungskörper 2, mit einem Außengewinde 3, einem teilweise darin eingeschobenen und gleichfalls lediglich abgebrochen dargestellten umgeformten Rohr 64, einem Stützring 65, mit zwei darin eingelassenen Dichtringen 70 und 72 sowie einer wiederum genormten Überwurfmutter 7, die mit ihrem Innengewinde 8 (BSP-Gewinde) auf das Außengewinde 3 des Verschraubungskörpers 2 aufgeschraubt ist.

Der Stützring 65 weist zwei Nuten 71 und 73 auf, von denen die Nut 71 in die keglige Spannfläche 18 des Stützrings 65 und die Nut 73 in die innere zylindrische Mantelfläche 61 eingestochen ist. Die Nut 70 weist im Querschnitt die Form eines Parallelogramms auf, wobei die seitlichen Nutwandungen 74 im rechten Winkel zu der Mittelachse 25 des Rohres 64 verlaufen. Die senkrecht zur Mittelachse 25 gemessene Tiefe 75 der Nut 70 ist kleiner als die parallel zu der Mittelachse 25 gemessene Nutbreite 76. Dasselbe gilt für die Nuttiefe 77 und die Nutbreite 78 jeweils der Nut 72. Der Übergang von der kegligen Spannfläche 18 des Stützrings 65 zu dessen äußerer zylindrischer Mantelfläche 80 ist in Form einer Hohlkehle 79 ausgebildet. Hierdurch wird es ermöglicht, die Überwurfmutter 7 nach einer gewissen Betriebszeit nochmals nachzuziehen, ohne dass zuvor eine Blockanlage von Stützring 65 und Verschraubungskörper 2 vorliegt. Durch einen derartigen Nachziehvorgang können evtl. aufgetretene Setzerscheinungen ausgeglichen und dadurch möglicherweise Undichtigkeiten der Rohrverbindung 60 vermieden werden.

Da der Außendurchmesser des Stützrings 65 im Bereich dessen zylindrischer Mantelfläche 80 nur geringfügig kleiner als der Innendurchmesser der Überwurfmutter 7 im Bereich des Innengewindes 8 ist, ist die rückwärtige keglige Spannfläche 14 des Stützrings 65 entsprechend groß und vermag eine gute Führung des Stützrings 65 in der Überwurfmutter 7 zu gewährleisten.

## Patentansprüche

1. Rohrverbindung (1, 1', 30, 30', 30", 40,40', 60) mit einem umgeformten Rohr (4, 34, 44, 64), einem Verschraubungskörper (2) mit einem Innenkonus (19), einer auf den Verschraubungskörper (2) aufschraubbaren Überwurfmutter (7) mit einer inneren Spannfläche (13, 53), die im Betriebszustand der Rohrverbindung (1, 1', 30, 30', 30", 40, 40", 60) mit einer dem Rohrende abgewandten umformtechnisch hergestellten, radial über die äußere Mantelfläche (21, 38) des Rohres (4, 34, 44, 64) nach außen vorstehenden Haltefläche (11, 51) eines Haltewulstes (10, 50) des Rohres (4, 34) zusammenwirkt, sowie mit einem Stützring (5, 35, 35", 45, 45', 65), der von der Stirnseite (9, 39) des Rohres (4, 34, 44) her auf dieses aufschiebbar ist und sich mit einer dem Rohrende zugewandten kegeligen Spannfläche (18) in dem Innenkonus (19) des Verschraubungskörpers (2) abstützt, wobei der Haltewulst (10, 50) des weiteren mit einer dem Rohrende zugewandten Haltefläche (12, 52) mit einer daran angepassten dem Rohrende abgewandten Haltefläche (24, 54) des Stützrings (5, 35', 35", 45, 45', 65) zusammenwirkt, **dadurch gekennzeichnet, dass** der Innenkonus (19) des Verschraubungskörpers (2) unmittelbar in dessen zylindrische, innere Mantelfläche (29), die die Durchgangsbohrung (D) des Verschraubungskörpers (2) definiert, übergeht und sich die Stirnfläche (9, 39) des Rohres (4, 34, 44, 64) zumindest zum Teil radial nach innen in den Querschnitt der Durchgangsbohrung (D) des Verschraubungskörpers (2) erstreckt.

2. Rohrverbindung nach Anspruch 1, **dadurch gekennzeichnet, dass** dem Stützring (5, 35, 35", 45, 45') ein Dichtring (6, 6' 36") in Form einer Weichdichtung vorgelagert ist, wobei der Dichtring (6, 6', 36', 36") in einer im Querschnitt dreieckförmigen Kammer eingeschlossen ist, die von einer äußeren Mantelfläche (21) des Endabschnitts (17,47) des Rohres(4, 34, 44), einer dem Rohrende zugewandten vorderen Stirnfläche (20, 38) des Stützrings (5, 35, 35", 45, 45') und dem Innenkonus (19) des Verschraubungskörpers (2) gebildet ist.

3. Rohrverbindung nach Anspruch 2, **dadurch gekennzeichnet, dass** der Dichtring (6, 36', 36") mit einer Verbindungsfläche an die vordere Stirnfläche des Stützrings (5, 35', 35") geklebt oder daran anvulkanisiert ist.

4. Rohrverbindung nach einem der Ansprüche 1 bis 3, **dadurch gekennzeichnet, dass** das Rohrende einen zylindrischen Endabschnitt (17) aufweist, dessen Außendurchmesser (16) dem Außendurchmesser (26) des Rohres (4, 34) im unverformten Bereich entspricht.

5. Rohrverbindung nach Anspruch 4, **dadurch gekennzeichnet, dass** der Stützring (35") eine konische, vordere Stirnfläche (38) besitzt, an der im Betriebszustand der Rohrverbindung (30") der Dichtring (36") anliegt.

6. Rohrverbindung nach einem der Ansprüche 4 oder 5, **dadurch gekennzeichnet, dass** der Stützring (5, 35, 35") an seinem dem Rohrende abgewandten Ende einen sich radial außerhalb des Haltewulstes (10) erstreckenden Ansatz (22) aufweist.

7. Rohrverbindung nach einem der Ansprüche 1, bis 3, **dadurch gekennzeichnet, dass** das Rohrende einen kegeligen Abschnitt (48) aufweist, an den ein sich bis zu dem Haltewulst (50) erstreckender zylindrischer Abschnitt (49) angeschlossen ist

8. Rohrverbindung nach Anspruch 7, **dadurch gekennzeichnet, dass** die innere Mantelfläche des Stützrings (45) einen zylindrischen Abschnitt aufweist, der im Durchmesser dem Durchmesser des zylindrischen Abschnitts (49) des Rohrendes angepasst ist und einen konischen Abschnitt (48') aufweist, der dem kegeligen Abschnitt (48) des Rohrendes angepasst ist.

9. Rohrverbindung nach Anspruch 6 oder 7, **dadurch gekennzeichnet, dass** der Haltewulst (50) im Betriebszustand der Rohrverbindung von der inneren Spannfläche (53) der Überwurfmutter (7) gespannt wird.

10. Rohrverbindung nach einem der Ansprüche 1 bis 6, **dadurch gekennzeichnet, dass** der Stützring (5, 35, 35") eine Spannfläche (14) besitzt, die im Betriebszustand der Rohrverbindung (1, 1', 30, 30', 30") an der inneren Spannfläche (13) der Überwurfmutter (7) anliegt.

11. Rohrverbindung nach einem der Ansprüche 8 bis 10, **dadurch gekennzeichnet, dass** der Stützring (45') eine vordere, senkrecht zur Mittelachse (25) des Rohres (44) ausgerichtete Anschlagfläche (45) aufweist, die im Betriebszustand an einer ebenso ausgerichteten Stirnfläche (56) des Verschraubungskörpers (2) anliegt.

12. Rohrverbindung nach einem der Ansprüche 1 bis 11, **dadurch gekennzeichnet, dass** der Haltewulst (50) eine vordere, senkrecht zur Mittelachse (25) des Rohres (44) ausgerichtete Spannfläche (52) besitzt, die mit einer ebenso ausgerichteten, dem Rohrende abgewandten hinteren Spannfläche (54) des Stützrings (45, 45') zusammenwirkt.

13. Rohrverbindung nach einem der Ansprüche 1 bis 12, **dadurch gekennzeichnet, dass** die innere Spannfläche (13) der Überwurfmutter (7) konisch und die damit zusammenwirkende Spannfläche (51) des Haltewulstes (50) angepasst kegelförmig verläuft.

14. Rohrverbindung (60) nach einem der Ansprüche 1 bis 13, **dadurch gekennzeichnet, dass** der Stützring (65) mindestens zwei umlaufende Nuten (71, 73) zur Aufnahme jeweils eines Dichtrings (70, 72), vorzugsweise jeweils einer Weichdichtung, aufweist, wobei eine erste Nut (71) sich in der kegligen Spannfläche (18) des Stützrings (65) befindet und der Öffnungsquerschnitt dieser Nut (71) im Betriebszustand der Rohrverbindung (60) von dem Innenkonus (19) des Verschraubungskörpers (2) verschlossen wird und eine zweite Nut (73) sich in einer inneren zylindrischen Mantelfläche (61) des Stützrings (65) befindet und der Öffnungsquerschnitt in dieser Nut (73) im Betriebszustand der Rohrverbindung (60) von der äußeren Mantelfläche (58) des Rohres (64) verschlossen wird.

15. Rohrverbindung nach Anspruch 14, **dadurch gekennzeichnet, dass** der Nutgrund der einen Nut (71) parallel zu der kegligen Spannfläche (18) des Stützrings (65) verläuft.

16. Rohrverbindung nach Anspruch 14 oder 15, **dadurch gekennzeichnet, dass** die Nutwandungen (74) ausgehend von der an die Nut (71, 73) angrenzenden Oberfläche des Stützrings (65) im Betriebszustand der Rohrverbindung (60) unter einem Winkel von 90° zu der Mittelachse (25) des Rohres (64) ausgerichtet sind.

17. Rohrverbindung nach einem der Ansprüche 14 bis 16, **dadurch gekennzeichnet, dass** die senkrecht zu den Nutwandungen (74) gemessene Nutbreite (76, 78) größer als die senkrecht zu der Mittelachse (25) des Rohres (64) gemessene Nuttiefe (75, 77) ist.

18. Rohrverbindung nach einem der Ansprüche 14 bis 17, **dadurch gekennzeichnet, dass** der Außendurchmesser des Stützrings (65) nur geringfügig kleiner als der Innendurchmesser der Überwurfmutter (7) ist.

19. Rohrverbindung nach einem der Ansprüche 14 bis 18, **dadurch gekennzeichnet, dass** der Übergang von der kegligen Spannfläche (18) des Stützrings (65) zu einer äußeren zylindrischen Mantelfläche (80) des Stützrings (65) in Form einer Hohlkehle (79) ausgebildet ist.

## Claims

1. Pipe connection (1, 1', 30, 30', 30", 40, 40', 60) with a deformed pipe (4, 34, 44, 64), a screwing body (2) with an internal taper (19), a cap nut (7) which can be screwed onto the screwing body (2) and has an inner clamping face (13, 53) which cooperates in the operating state of the pipe connection (1, 1', 30, 30', 30", 40, 40", 60) with a holding face (11, 51), which is produced by deformation, is remote from the pipe end and protrudes radially outward via the outer circumferential surface (21, 38) of the pipe (4, 34, 44, 64), of a holding collar (10, 50) of the pipe (4, 34), and also with a support ring (5, 35, 35", 45, 45', 65) which can be slid from the end face (9, 39) of the pipe (4, 34, 44) onto said pipe and is supported with a conical clamping face (18) facing the pipe end in the internal taper (19) of the screwing body (2), the holding collar (10, 50) further cooperating with a holding face (12, 52) facing the pipe end and having a holding face (24, 54), adapted thereto and remote from the pipe end, of the support ring (5, 35, 35", 45, 45', 65), **characterised in that** the internal taper (19) of the screwing body (2) merges directly with the cylindrical inner circumferential surface (29) thereof which defines the through-hole (D) in the screwing body (2) and the end face (9, 39) of the pipe (4, 34, 44, 64) extends, at least in part, radially inwardly into the cross section of the through-hole (D) in the screwing body (2).

2. Pipe connection according to claim 1, **characterised in that** a ring seal (6, 6', 36") in the form of a soft seal is provided upstream of the support ring (5, 35, 35", 45, 45'), the ring seal (6, 6', 36', 36") being enclosed in a chamber which is triangular in cross section and is formed from an outer circumferential surface (21) of the end portion (17, 47) of the pipe (4, 34, 44), a front end face (20, 38), facing the pipe end, of the support ring (5, 35, 35", 45, 45') and the internal taper (19) of the screwing body (2).

3. Pipe connection according to claim 2, **characterised in that** the ring seal (6, 36', 36") is bonded at a connecting face to the front end face of the support ring (5, 35', 35") or is vulcanised thereon.

4. Pipe connection according to any one of claims 1 to 3, **characterised in that** the pipe end has a cylindrical end portion (17), the external diameter (16) of which corresponds to the external diameter (26) of the pipe (4, 34) in the non-deformed region.

5. Pipe connection according to claim 4, **characterised in that** the support ring (35") has a conical front end face (38) against which the ring seal (36") rests in the operating state of the pipe connection (30").

6. Pipe connection according to either claim 4 or claim 5, **characterised in that** the support ring (5, 35, 35") has at its end remote from the pipe end an attachment (22) extending radially outside the holding collar (10).

7. Pipe connection according to any one of claims 1 to 3, **characterised in that** the pipe end has a conical portion (48) to which a cylindrical portion (49) extending up to the holding collar (50) is connected.

8. Pipe connection according to claim 7, **characterised in that** the inner circumferential surface of the support ring (45) has a cylindrical portion, the diameter of which is adapted to the diameter of the cylindrical portion (49) of the pipe end, and has a conical portion (48') adapted to the conical portion (48) of the pipe end.

9. Pipe connection according to either claim 6 or claim 7, **characterised in that** in the operating state of the pipe connection the holding collar (50) is clamped by the inner clamping face (53) of the cap nut (7).

10. Pipe connection according to any one of claims 1 to 6, **characterised in that** the support ring (5, 35, 35") has a clamping face (14) which, in the operating state of the pipe connection (1, 1', 30, 30', 30"), rests against the inner clamping face (13) of the cap nut (7).

11. Pipe connection according to any one of claims 8 to 10, **characterised in that** the support ring (45') has a front stop face (45) which is oriented perpendicularly to the centre axis (25) of the pipe (44) and rests in the operating state against a likewise oriented end face (56) of the screwing body (2).

12. Pipe connection according to any one of claims 1 to 11, **characterised in that** the holding collar (50) has a front clamping face (52) which is oriented perpendicularly to the centre axis (25) of the pipe (44) and cooperates with a likewise oriented rear clamping face (54), remote from the pipe end, of the support ring (45, 45').

13. Pipe connection according to any one of claims 1 to 12, **characterised in that** the inner clamping face (13) of the cap nut (7) extends conically and the clamping face (51) cooperating therewith of the holding collar (50) extends in an adapted conical manner.

14. Pipe connection (60) according to any one of claims 1 to 13, **characterised in that** the support ring (65) has at least two peripheral grooves (71, 73) for receiving a respective ring seal (70, 72), preferably a respective soft seal, a first groove (71) being located in the conical clamping face (18) of the support ring (65) and the opening cross section of this groove (71) being sealed, in the operating state of the pipe connection (60), from the internal taper (19) of the screwing body (2) and a second groove (73) being located in an inner cylindrical circumferential surface (61) of the support ring (65) and the opening cross section in this groove (73) being sealed, in the operating state of the pipe connection (60), from the outer circumferential surface (58) of the pipe (64).

15. Pipe connection according to claim 14, **characterised in that** the base of the one groove (71) extends parallel to the conical clamping face (18) of the support ring (65).

16. Pipe connection according to either claim 14 or claim 15, **characterised in that** in the operating state of the pipe connection (60) the groove walls (74) are oriented, starting from the surface of the support ring (65) adjoining the groove (71, 73), at an angle of 90° to the centre axis (25) of the pipe (64).

17. Pipe connection according to any one of claims 14 to 16, **characterised in that** the width of the groove (76, 78) measured perpendicularly to the groove walls (74) is greater than the depth of the groove (75, 77) measured perpendicularly to the centre axis (25) of the pipe (64).

18. Pipe connection according to any one of claims 14 to 17, **characterised in that** the external diameter of the support ring (65) is only slightly smaller than the internal diameter of the cap nut (7).

19. Pipe connection according to any one of claims 14 to 18, **characterised in that** the transition from the conical clamping face (18) of the support ring (65) to an outer cylindrical circumferential surface (80) of the support ring (65) is configured in the form of a channel (79).

## Revendications

1. Raccord de tuyaux (1, 1', 30, 30', 30", 40, 40', 60) avec un tuyau mis en forme (4, 34, 44, 64), un élément de vissage (2) avec un réceptacle conique (19), un contre-écrou (7) pouvant être vissé sur l'élément de vissage (2) et possédant une surface de serrage intérieure (13, 53), qui coopère dans l'état de fonctionnement du raccord de tuyaux (1, l', 30, 30', 30", 40, 40", 60) avec une surface de maintien (11, 51) d'un bourrelet de maintien (10, 50) du tuyau orientée à l'opposé de l'extrémité du tuyau, obtenue par formage et dépassant dans le sens radial au-delà de la surface d'enveloppe extérieure (21, 38) du tuyau (4, 34, 44, 64) vers l'extérieur, ainsi qu'avec une bague d'appui (5, 35, 35", 45, 45', 65), qui peut être enfilée par la face d'extrémité (9, 39) du tuyau (4, 34, 44) sur celui-ci et qui s'appuie par une surface de serrage conique (18) orientée vers l'extrémité du tuyau dans le réceptacle conique (19) de l'élément de vissage (2), le bourrelet de maintien (10, 50) coopérant en outre par une surface de maintien (12, 52) orientée vers l'extrémité du tuyau avec une surface de maintien (24, 54) de la bague d'appui (5, 35', 35", 45, 45', 65) adaptée à celle-ci et orientée à l'opposé de l'extrémité du tuyau, **caractérisé en ce que** le réceptacle conique (19) de l'élément de vissage (2) est directement suivi de sa surface d'enveloppe intérieure cylindrique (29), qui définit l'alésage traversant (D) de l'élément de vissage (2), et la face d'extrémité (9, 39) du tuyau (4, 34, 44, 64) s'étend au moins partiellement vers l'intérieur dans le sens radial dans la section de l'alésage traversant (D) de l'élément de vissage (2).

2. Raccord de tuyaux selon la revendication 1, **caractérisé en ce qu'**il est prévu avant la bague d'appui (5, 35, 35", 45, 45') un joint d'étanchéité (6, 6', 36") constitué par un joint souple, lequel joint d'étanchéité (6, 6', 36', 36") est renfermé dans une chambre de section triangulaire qui est formée par une surface d'enveloppe extérieure (21) de la partie d'extrémité (17, 47) du tuyau (4, 34, 44), une face d'extrémité avant (20, 38) de la bague d'appui (5, 35, 35", 45, 45') orientée vers l'extrémité du tuyau et le réceptacle conique (19) de l'élément de vissage (2).

3. Raccord de tuyaux selon la revendication 2, **caractérisé en ce que** le joint d'étanchéité (6, 36', 36") est collé sur une surface d'assemblage à la face d'extrémité avant de la bague d'appui (5, 35', 35") ou fixé à celle-ci par vulcanisation.

4. Raccord de tuyaux selon l'une des revendications 1 à 3, **caractérisé en ce que** l'extrémité du tuyau présente une partie d'extrémité cylindrique (17), dont le diamètre extérieur (16) correspond au diamètre extérieur (26) du tuyau (4, 34) dans la partie non mise en forme.

5. Raccord de tuyaux selon la revendication 4, **caractérisé en ce que** la bague d'appui (35") possède une face d'extrémité avant (38) conique, sur laquelle repose le joint d'étanchéité (36") dans l'état de fonctionnement du raccord de tuyaux (30").

6. Raccord de tuyaux selon l'une des revendications 4 ou 5, **caractérisé en ce que** la bague d'appui (5, 35, 35") possède à son extrémité orientée à l'opposé de l'extrémité du tuyau un épaulement (22) qui s'étend dans le sens radial à l'extérieur du bourrelet de maintien (10).

7. Raccord de tuyaux selon l'une des revendications 1 à 3, **caractérisé en ce que** l'extrémité du tuyau possède une partie conique (48) à laquelle se raccorde une partie cylindrique (49) qui s'étend jusqu'au bourrelet de maintien (50).

8. Raccord de tuyaux selon la revendication 7, **caractérisé en ce que** la surface d'enveloppe intérieure de la bague d'appui (45) possède une partie cylindrique dont le diamètre est adapté au diamètre de la partie cylindrique (49) de l'extrémité du tuyau et qui possède une partie conique (48') adaptée à la partie conique (48) de l'extrémité du tuyau.

9. Raccord de tuyaux selon la revendication 6 ou 7, **caractérisé en ce que** le bourrelet de maintien (50) est serré, dans l'état de fonctionnement du raccord de tuyaux, par la surface de serrage intérieure (53) du contre-écrou (7).

10. Raccord de tuyaux selon l'une des revendications 1 à 6, **caractérisé en ce que** la bague d'appui (5, 35, 35) possède une surface de serrage (14) qui repose, dans l'état de fonctionnement du raccord de tuyaux (1, 1', 30, 30', 30"), sur la surface de serrage intérieure (13) du contre-écrou (7).

11. Raccord de tuyaux selon l'une des revendications 8 à 10, **caractérisé en ce que** la bague d'appui (45') possède une surface de butée (45) antérieure perpendiculaire à l'axe médian (25) du tuyau (44), qui repose, dans l'état de fonctionnement, sur une face d'extrémité (56) de l'élément de vissage (2) orientée de la même manière.

12. Raccord de tuyaux selon l'une des revendications 1 à 11, **caractérisé en ce que** le bourrelet de maintien (50) possède une surface de serrage antérieure (52) perpendiculaire à l'axe médian (25) du tuyau (44), qui coopère avec une surface de serrage postérieure (54) de la bague d'appui (45, 45') orientée de la même manière et tournée à l'opposé de l'extrémité du tuyau.

13. Raccord de tuyaux selon l'une des revendications 1 à 12, **caractérisé en ce que** la surface de serrage intérieure (13) du contre-écrou (7) est conique et la surface de serrage (51) du bourrelet de maintien (50) coopérant avec elle a une forme conique adaptée.

14. Raccord de tuyaux (60) selon l'une des revendications 1 à 13, **caractérisé en ce que** la bague d'appui (65) possède au moins deux rainures circulaires (71, 73) destinées à recevoir chacune un joint d'étanchéité (70, 72), de préférence chacune un joint souple, une première rainure (71) étant ménagée dans la surface de serrage conique (18) de la bague d'appui (65) et la section d'ouverture de cette première rainure (71) étant fermée, dans l'état de fonctionnement du raccord de tuyaux (60), par le réceptacle conique (19) de l'élément de vissage (2), et une deuxième rainure (73) étant ménagée dans une surface d'enveloppe cylindrique intérieure (61) de la bague d'appui (65) et la section d'ouverture de cette rainure (73) étant fermée, dans l'état de fonctionnement du raccord de tuyaux (60), par la surface d'enveloppe extérieure (58) du tuyau (64).

15. Raccord de tuyaux selon la revendication 14, **caractérisé en ce que** le fond d'une rainure (71) est parallèle à la surface de serrage conique (18) de la bague d'appui (65).

16. Raccord de tuyaux selon la revendication 14 ou 15, **caractérisé en ce que** les parois des rainures (74) forment à partir de la surface de la bague d'appui (65) contiguë à la rainure (71, 73), dans l'état de fonctionnement du raccord de tuyaux (60), un angle de 90° par rapport à l'axe médian (25) du tuyau (64).

17. Raccord de tuyaux selon l'une des revendications 14 à 16, **caractérisé en ce que** la largeur des rainures (76, 78) mesurée perpendiculairement aux parois des rainures (74) est plus grande que la profondeur des rainures (75, 77) mesurée perpendiculairement à l'axe médian (25) du tuyau (64).

18. Raccord de tuyaux selon l'une des revendications 14 à 17, **caractérisé en ce que** le diamètre extérieur de la bague d'appui (65) est très légèrement inférieur au diamètre intérieur du contre-écrou (7).

19. Raccord de tuyaux selon l'une des revendications 14 à 18, **caractérisé en ce que** la transition entre la surface de serrage conique (18) de la bague d'appui (65) et une surface d'enveloppe cylindrique extérieure (80) de la bague d'appui (65) est conformée comme une gorge creuse (79).
